# EUROPÄISCHE PATENTSCHRIFT

(11) **EP 0 492 185 B1**
(45) Veröffentlichungstag und Bekanntmachung des Hinweises auf die Patenterteilung: **20.04.1994**
(21) Anmeldenummer: 91120726.4
(22) Anmeldetag: 03.12.1991
(51) Int. Cl.: B65G 47/244, B65G 15/10, B65G 21/14

(54) **Drehvorrichtung für auf einem Transportband gefördertes Stückgut**
Turning device for articles conveyed on a conveyor belt
Dispositif pour tourner un article transporté sur une bande transporteuse

(30) Priorität: 22.12.1990 DE 4041477
(43) Veröffentlichungstag der Anmeldung: 01.07.1992
(73) Patentinhaber: Maschinenbau Heinrich Hajek GmbH & Co, A-6901 Bregenz (AT)
(72) Erfinder: Wegscheider, Jürgen, W-7972 Isny (DE); Hartmann, Franz, W-8999 Weiler (DE); Zeuschner, Roland, W-8994 Hergatz (DE)
(74) Vertreter: Riebling, Peter, Dr.-Ing.

(56) Entgegenhaltungen:
- DE-U- 7 826 035
- GB-A- 1 310 681
- GB-A- 2 067 494
- GB-A- 2 186 252

## Beschreibung

Gegenstand der vorliegenden Erfindung ist eine Drehvorrichtung nach dem Oberbegriff des Patentanspruchs 1.

Im Transportwesen beim Transport von Stückgütern auf Transportbändern besteht das Problem, daß man ein Stückgut auf dem Transportband in Bezug zur Transportrichtung drehen will. Eine derartige Drehung ist beispielsweise dann erforderlich, wenn im Transportweg zwischen einer Produktionsmaschine und einer Verpackungsmaschine das Produkt so gedreht werden muß, daß es lagengerecht der Verpackungsmaschine zugeführt werden kann.

Bekannt ist es, das Transportband etwa in der Mitte zu teilen und die beiden Trums dieses geteilten Transportbandes mit getrennter Geschwindigkeit anzutreiben. Sobald ein Stückgut im Zwischenraum zwischen beiden Transportbändern liegt und sowohl das eine Transportband als auch das andere Transportband kraftschlüssig berührt, kommt es zu einer Drehung dieses Stückgutes entsprechend der Differenzgeschwindigkeit zwischen den beiden Transportbandhälften.

Nachteilig bei dieser bekannten Drehanordnung ist jedoch, daß, wenn das Stückgut nicht genau mittig auf dem Spalt zwischen der einen Hälfte und der anderen Hälfte des Transportbandes liegt,dann die Drehung asymmetrisch erfolgt, d.h. sie erfolgt nicht entsprechend der vorgegebenen Differenzgeschwindigkeit um einen bestimmten geforderten Drehwinkel. Damit kann ein reproduzierbares Drehen von Stückgütern nicht durchgeführt werden.

Der vorliegenden Erfindung liegt deshalb die Aufgabe zugrunde, ein mindestens in zwei Einzeltransportbänder unterteiltes Transportband so weiterzubilden, daß bei einem Antrieb der einzelnen Transportbänder mit unterschiedlichen Geschwindigkeiten eine möglichst genau reproduzierbare Drehung des Stückgutes erreicht werden kann.

Zur Lösung der gestellten Aufgabe ist die Erfindung durch die Merkmale des Hauptanspruchs gekennzeichnet. Es ist somit wichtig, daß die Transportstrecke auf einem Förderband, auf dem das Stückgut gedreht werden soll, aus einzelnen, mit unterschiedlicher Geschwindigkeit angetriebenen Transportriemen besteht, daß die Geschwindigkeit der einzelnen, nebeneinander liegenden Transportriemen in einem genau abgestuften Verhältnis steht und daß alle Transportriemen über eine drehend angetriebene Konuswelle geführt sind, welche Konuswelle aus einzelnen, drehfest gekoppelten Riemenscheiben besteht, wobei die Riemenscheiben, über die Länge der Konuswelle gesehen, eine lineare Durchmesseränderung aufweisen.

Mit dieser bekannten technischen Lehre nach GB-A- 1 310 681 wird der wesentliche Vorteil erreicht, daß mit einer einzigen, drehangetriebenen Konuswelle nun die einzelnen Transportriemen, die z.B. als Rundriemen oder bandförmig ausgebildet sein können, mit genau abgestufter Geschwindigkeitsdifferenz angetrieben werden können.

Durch den Antrieb der Konuswelle selbst entfällt die Notwendigkeit, daß man noch weitere Umlenkwellen antreibt. Hierbei ist vorgesehen, daß alle Umlenkwellen aus einzelnen Riemenscheiben bestehen, wobei jedem Transportriemen eine Riemenscheibe zugeordnet ist, und daß alle Riemenscheiben auf der jeweiligen Umlenkwelle drehbar zueinander gelagert sind, also nicht drehfest gekoppelt sind. Auf diese Weise wird jedem einzelnen Transportriemen dieses Förderbandes eine eigene Geschwindigkeit zugeordnet, wobei, über die Breite des Transportbandes gesehen, z.B. an der linken Seite der außenliegende Transportriemen die niedrigste Geschwindigkeit hat und die Geschwindigkeit dann linear, über die benachbarten Transportriemen gesehen, ansteigt bis zu dem rechts außenliegenden Transportriemen, der die höchste Geschwindigkeit aufweist.

Der Geschwindigkeitsunterschied zwischen den einzelnen Transportriemen wird hierbei durch die Steigung der Konuswelle gegeben, d.h. also durch den Durchmesserunterschied zwischen den benachbarten Riemenscheiben.

Gelangt nun ein zu drehendes Stückgut auf den Einlauf des Förderbandes, dann gelangt es auf eine Riemenanordnung (entsprechend seiner Breite), wobei es z.B. mit dem sechsten bis sechszehnten Riemen dieses Förderbandes in Kontakt kommt. Nachdem der Geschwindigkeitsunterschied zwischen den Riemen 6 - 16 genauso groß ist wie z.B. zwischen dem Riemen 1 bis 11, spielt es deshalb keine Rolle, an welcher Stelle bezüglich der Breite des Förderbandes das Stückgut auf das Förderband gelangt. Es wird immer gleichmässig entsprechend der eingestellten Differenzgeschwindigkeit (gewählten Konusneigung der Konuswelle) gedreht, und zwar entsprechend der Länge des Förderbandes.

Der Drehwinkel wird hierbei durch die Wegstrecke bestimmt, in der die Geschwindigkeitsdifferenz der einzelnen Transportriemen reibschlüssig auf der Unterseite des zu drehenden Stückgutes wirkt.

Zur Einstellung der Drehung entsprechend den Erfordernissen wird nun gemäß der Erfindung die Länge der Förderstrecke des Förderbandes einstellbar ausgebildet, wozu die Förderstrecke dadurch einstellbar gestaltet ist, daß die am Förderende liegende Scheibenwelle verschiebbar in Förderrichtung ausgebildet ist. Auf diese Weise kann sehr einfach die Länge der Förderstrecke verändert werden, wodurch damit der Drehwinkel eingestellt wird, vorausgesetzt, daß die Konuswelle unverändert beibehalten wird.

Soweit sich an das erfindungsgemässe Förderband zur Drehung des Stückgutes noch ein weiteres Ausgleichsband anschließt, ist es vorgesehen, daß bei Veränderung der Förderlänge des Förderbandes zur Drehung des Stückgutes auch gleichzeitig das Ausgleichsband mit verändert wird, um einen unerwünschten Spalt im Übergang zwischen dem Förderband zur Drehung und dem nachgeschalteten Ausgleichsband zu vermeiden.

Für diese Ausführungsform ist vorgesehen, daß die in Förderrichtung vorne liegende Umlenkrolle des Ausgleichsbandes zusammen mit der in Förderrichtung hinten liegenden Scheibenwelle des Förderbandes zur Drehung auf einer gemeinsamen Verstellplatte 20 angeordnet sind, welche Verstellplatte in zugeordneten Verstellführungen in einem Maschinengestell in Förderrichtung und in Gegenrichtung hierzu verschiebbar angeordnet ist. Auf diese Weise wird beispielsweise bei Verkürzung der Förderstrecke des Förderbandes, welches der Drehung dient, gleichzeitig die Förderstrecke des nachgeschalteten Ausgleichsbandes verlängert.

Ein besonderer Vorteil der vorliegenden Erfindung ergibt sich dadurch, daß nur eine einzige Konuswelle verwendet werden muß und daß alle anderen Umlenkwellen als Scheibenwellen ausgebildet sind, die getrennt voneinander gelagerte, einzelne Riemenscheiben aufweisen, wobei über jede Riemenscheibe ein Transportriemen läuft.

Mit der Verwendung von zylindrischen Riemenscheiben, welche jeweils eine Umlenkwelle bilden, ergibt sich der Vorteil, daß der Anschluß an entsprechende Einlauf- und Auslaufbänder gerade ausgeführt werden kann und daß deshalb eine einfache Produktübergabe von vor- und nachgeschalteten Bändern auf das Förderband zur Drehung des Stückgutes durchgeführt werden kann.

In einer Weiterbildung der vorliegenden Erfindung ist vorgesehen, daß noch eine weitere Einstellvorrichtung zur Einstellung der Drehung vorgesehen ist.

Vorstehend wurde beschrieben, daß eine erste Möglichkeit zur Einstellung der Drehung des zu drehenden Stückgutes dadurch erfolgt, daß die Länge der Förderstrecke des Förderbandes verändert werden kann.

In der nachfolgend beschriebenen Ausführungsform ist eine weitere Ausführungsform beschrieben, die eine Umlenkeinrichtung zeigt in Verbindung mit einer Kupplungseinrichtung, so daß es mit dieser Umlenkeinrichtung möglich ist, die unterschiedlichen Geschwindigkeiten der einzelnen Transportriemen auszuschalten und alle Transportriemen schlagartig über eine Kupplung synchron laufen zu lassen. Es ist also möglich, den Differenzgeschwindigkeitsantrieb der einzelnen Transportriemen über eine entsprechende Umlenkeinrichtung und eine Kupplung zu synchronisieren, um alle Transportriemen mit gleicher Geschwindigkeit anzutreiben.

Eingangs wurde beschrieben, daß die Konuswellen aus einzelnen Riemenscheiben bestehen, die drehfest miteinander gekoppelt sind und auf einer gemeinsamen Antriebswelle sitzen. Zur Ausführung des Ausführungsbeispiels zwecks Synchronisierung der Geschwindigkeiten der einzelnen Transportriemen ist nun vorgesehen, daß die einzelnen im Durchmesser abgestuften Riemenscheiben auf der Welle kuppelbar angeordnet sind und entweder drehfest mit der Welle gekuppelt werden können oder frei auf der Welle laufen können. Hierzu ist in einfacher Weise in axialer Richtung an der Stirnseite der Konuswelle eine Spannschraube angebracht. Beim Anziehen dieser Spannschraube werden die im Durchmesser abgestuften Riemenscheiben reibschlüssig miteinander gekuppelt und gegen einen drehfest mit der Welle verbundenen Flansch gepresst, so daß alle Riemenscheiben mit der Welle mitgenommen werden.

Sobald die Spannschraube gelöst wird, laufen die Riemenscheiben frei und sind von der drehangetriebenen Welle entkoppelt.

Hierbei ist es vorgesehen, daß die einzelnen schnurförmigen oder bandförmigen Förderbänder nun nicht nur allein über die vorher beschriebene Konuswelle laufen, sondern im übrigen noch mit einem genügenden Umschlingungswinkel über eine zylindrisch ausgebildete Antriebswelle. Die Antriebswelle besteht hierbei in der gleichen Art wie die Konuswelle aus einzelnen Riemenscheiben, nur daß die Riemenscheiben zylindrisch ausgebildet sind und über die axiale Länge der Antriebswelle gesehen gleichen Durchmesser aufweisen. Es ist dieselbe Kupplungseinrichtung mit einer Spannschraube vorhanden, so daß es ebenfalls möglich ist, wahlweise die zylindrischen Riemen gleichen Durchmessers entweder drehfest mit der Antriebswelle zu kuppeln oder von der Antriebswelle zu entkuppeln.

Zur Umschaltung von der Drehung des Stückgutes auf einen geradlinigen Transport des Stückgutes wird nun einfach die Kupplung der Konuswelle entkuppelt, so daß die einzelnen im Durchmesser abgestuften Riemenscheiben frei laufen, und im Gegenzug wird gleichzeitig die Spannschraube der oberen zylindrischen Antriebswelle eingekuppelt, so daß alle im Durchmesser gleichen Riemenscheiben mit der Antriebswelle gekuppelt sind. Es wird somit von einem Konusantrieb auf einen Zylinderantrieb umgeschaltet. Die einzelnen Transportriemen laufen zwar nach wie vor über die im Durchmesser abgestuften Riemenscheiben der Konuswelle, nachdem aber diese einzelnen Riemenscheiben vom Antrieb abgekuppelt sind, kommt es nicht mehr zu einer Differenzgeschwindigkeit.

Damit ergibt sich also eine einfache Möglichkeit zur Umschaltung von einem "Zylinderantrieb" auf einen "Konusantrieb".

D.h. im Umschlingungsweg der einzelnen Förderbänder ist also eine zylindrische Antriebswelle eingeschaltet, deren zylindrische Riemenscheiben entweder mit dem Antrieb gekuppelt oder entkuppelt werden können, und umgekehrt können dementsprechend auch die im Durchmesser abgestuften Riemenscheiben der Konusscheibe in umgekehrter Weise entkuppelt oder mit der Antriebswelle gekuppelt werden. Es bedarf also keines Umbaus der gesamten Fördereinrichtung, wenn eine Drehung nicht mehr erwünscht wird, sondern das Produkt ungedreht über die Förderstrecke geführt werden soll.

Selbstverständlich ist es möglich, die Kupplung mit den beschriebenen zwei Spannschrauben auch elektromagnetisch gesteuert auszuführen, so daß auch während der Bewegung des Stückgutes auf dem Förderband von der Drehung auf eine geradlinige Förderbewegung umgeschaltet werden kann.

Diese Umschaltung kann ggf. auch rechnergestützt über eine optische Erkennungseinrichtung durchgeführt werden, wobei mit einer Videokamera die erfolgte Drehung des Produktes beobachtet wird und nach einem vorgegebenen Drehwinkel dann sofort mit entsprechenden Umschaltmitteln von dem Drehantrieb auf den geradlinigen Antrieb umgeschaltet wird.

Ebenso ist es möglich, statt der relativ teuren optischen Überwachung der Drehung eine einfache Zeitsteuerung vorzunehmen, d.h. es wird nur die Verweilzeit des auf dem Förderband gedrehten Stückgutes gemessen, und es wird vorausgesetzt, daß das Stückgut dann um einen gewissen, vorgegebenen Winkel gedreht wurde. Nach Ablauf dieser Zeit wird dann von dem Konusantrieb auf den Zylinderantrieb umgeschaltet.

Wichtig ist also bei der vorliegenden Anordnung, daß man ohne wesentliche Umschaltmaßnahmen sogar während des Betriebes der Maschine zwischen Drehwinkeln von 0° und 90° stufenlos umschalten kann. Ferner ist wesentlich, daß eine kontinuierliche Drehung möglich ist. Es können sich also mehrere Packungen, soweit sie sich nicht gegenseitig berühren, auf der Förderstrecke befinden, und diese Packungen werden alle nacheinanderfolgend gleichmässig und kontinuierlich gedreht. Ebenso ist es vorteilhaft, daß für die gesamte Fördereinrichtung nur ein einziger Antriebsmotor verwendet werden braucht, der also sowohl den Zylinderantrieb als auch den Konusantrieb antreibt und der zusätzlich noch zum Antrieb eines nachgeschalteten Ausgleichsbandes verwendet werden kann.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1: schematisiert die Draufsicht in Richtung des Pfeiles I in Figur 2 auf ein Förderband zur Drehung nach der Erfindung mit einem vorgeschalteten Einlaufband und einem nachgeschalteten Ausgleichsband,
- Figur 2: schematisiert in Seitenansicht das Förderband nach Figur 1,
- Figur 3: die Seitenansicht des Zylinder- und Konusantriebs in Pfeilrichtung III in Figur 2,
- Figur 4: die Stirnansicht der Anordnung nach Figur 3.

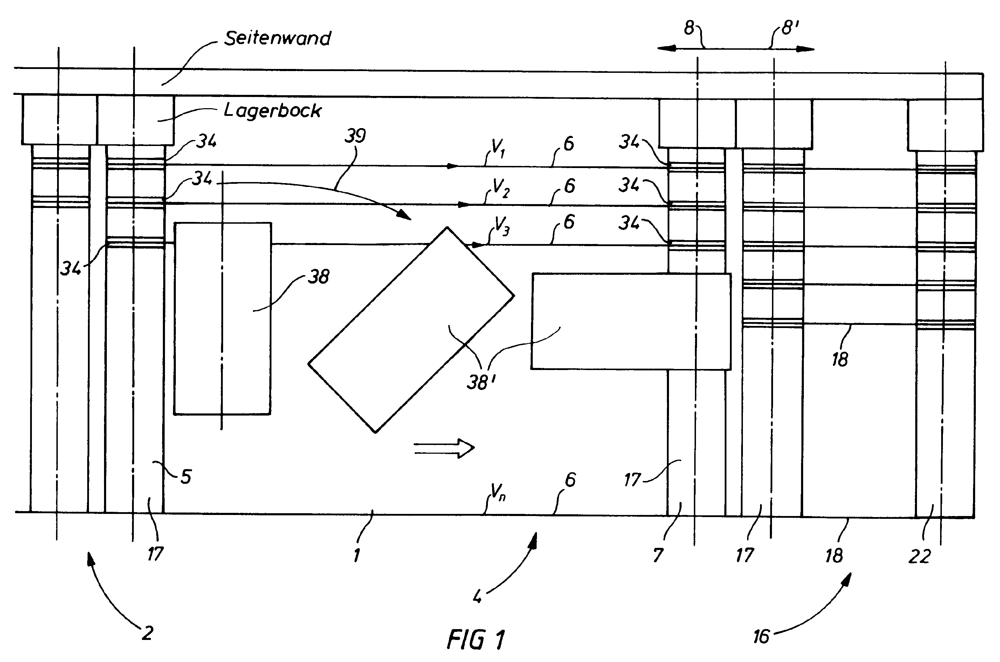

Die Fördereinrichtung nach Figur 1 besteht aus einem Einlaufband 2, einem Förderband 4, auf dem Stückgut 38 in Pfeilrichtung 39 kontinuierlich gedreht werden soll, und aus einem nachgeschalteten Ausgleichsband 16.

Statt des Einlaufbandes 2 können auch andere Zuführeinrichtungen verwendet werden, wie z.B. Hubgabeln, welche das zu drehende Stückgut 38 auf dem Förderband 4 ablegen, und dergleichen mehr.

Das Ausgleichsband 16 dient nur dazu, das vom Förderband 4 kommende, gedrehte Stückgut 38 an eine andere Einrichtung zu übergeben. Statt des Ausgleichsbandes 16 kann also auch eine andere Übergabevorrichtung vorgesehen sein.

Hierbei ist vorteilhaft, daß eine einlaufseitige Scheibenwelle 5 des Förderbandes 4 zylindrisch ausgebildet ist, so daß sich ein gerader, praktisch spaltfreier Übergang zum Einlaufband 2 ergibt. Der gleiche Vorteil ergibt sich auch bezüglich einer auslaufseitig angeordneten Scheibenwelle 7 in Bezug zum Ausgleichsband 16 und einer dort angeordneten Umlenkrolle 17.

Erfindungsgemäss besteht nun die Förderstrecke des Förderbandes 4 aus einzelnen, nebeneinander angeordneten Transportriemen 6, wobei jedem Transportriemen eine bezüglich des benachbarten Transportriemens unterschiedliche, Geschwindigkeit zugeordnet ist. Die Geschwindigkeiten sind hier schematisch mit V1, V2, V3... Vn angegeben.

Gelangt nun das zu drehende Stückgut 38 an der Einlaufseite des Förderbandes 4 über die Scheibenwelle 5 auf die Förderstrecke, dann kommt es in reibschlüssigen Kontakt mit einer Anzahl von nebeneinander liegenden Transportriemen 6. Es wird nun davon ausgegangen, daß das zu drehende Stückgut 38 mit seiner Mitte auf einem Transportriemen aufsitzt, und daß die links von der Mitte laufenden Transportriemen langsamer laufen und die rechts von der Mitte des Transportriemens ausgehenden Transportriemen schneller laufen. Es kommt also dadurch zwangsläufig zu einer Drehung des Stückgutes, da unterschiedliche Differenzgeschwindigkeiten auf die Außenkanten des Stückgutes wirken.

Die Drehung des Stückgutes ist also von der Breite des Stückgutes abhängig, d.h. wieviel Transportriemen reibschlüssig an der Unterseite des Stückgutes angreifen und welche Unterschiede der Differenzgeschwindigkeit sich hieraus ergeben. Bei einem sehr breiten Produkt ist deshalb die Anfangsdrehung dieses Stückgutes sehr groß, weil es mit seinen Kanten auf einem sehr langsam laufenden Transportband auf der einen Seite und auf einem sehr schnell laufenden Transportriemen auf der anderen Seite aufliegt; diese Drehung verlangtsamt sich jedoch mit zunehmender Drehung des Stückgutes in Richtung zur Förderstrecke, weil dann die Kanten des Stückgutes auf Transportriemen gelangen, die keine so hohen Differenzgeschwindigkeiten mehr aufweisen.

Wichtig hierbei ist, daß es gleichgültig ist, an welcher Stelle des Förderbandes das Stückgut auf das Förderband gelangt. Es kann also ganz links oder ganz rechts oder auf die Mitte des Förderbandes am Einlauf aufgegeben werden; es wird immer eine gleichbleibende Drehung erreicht, welche Drehung von den oben genannten Parametern abhängt.

Im Ausführungsbeispiel nach Figur 1 wird das Stückgut 38 in seine Stellung 38' gedreht, wobei beispielsweise ein Drehwinkel von 45° vorgesehen ist. Es ist selbstverständlich, daß jede beliebigen Drehwinkel zwischen 0 und 90° möglich sind; bei einer genügend langen Förderstrecke des Förderbandes 4 ist es sogar möglich, das Stückgut 38 um 360° zu drehen.

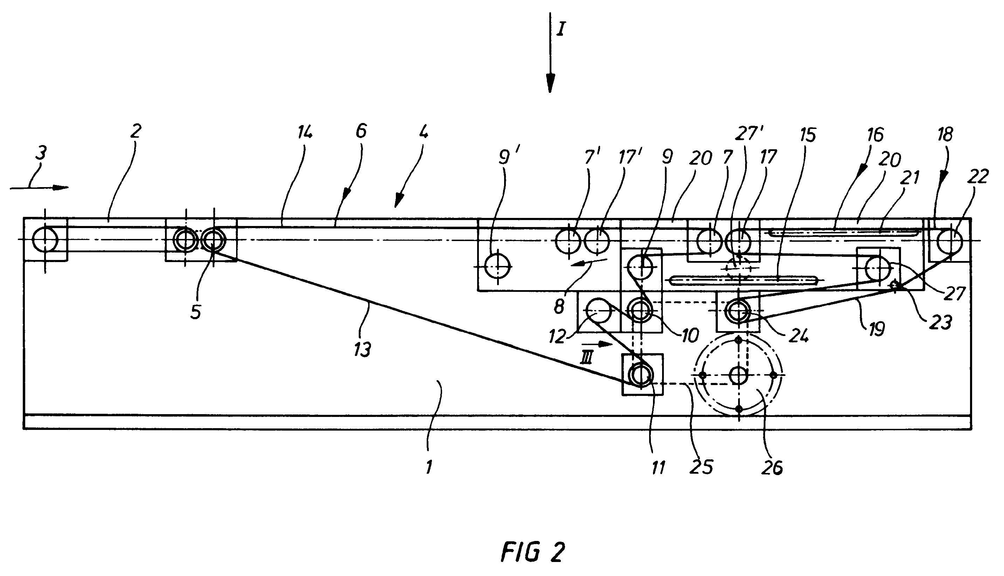

Eine besonders schnelle Drehung auf einer kurzen Förderstrecke erfolgt dann, wenn das zu drehende Stückgut 38 mit seiner Breitseite (wie in Figur 1 gezeigt) auf das Förderband 4 aufgegeben wird. Zur Einstellung des Drehwinkels in Pfeilrichtung 39 ist im übrigen die Länge des Förderbandes 4 veränderbar und zwar in den Pfeilrichtungen 8,8', wie in Zusammenhang mit der Figur 2 nachfolgend erläutert wird.

Die Figur 2 zeigt die gleichen Verhältnisse wie Figur 1 in Seitenansicht. In einem Maschinengestell 1 ist hierbei die vordere Scheibenwelle 5 drehbar gelagert, wobei alle nachfolgend erwähnten Scheibenwellen 5,7,9,12 als zylinderförmige Wellen ausgebildet sind, auf der jeweils Riemenscheiben 34 einzeln drehbar auf einer gemeinsamen Welle gelagert sind. Das zu drehende Stückgut 38 kommt also in Pfeilrichtung 3 über das Einlaufband 2 auf das Förderband 4.

Wie im Zusammenhang mit Figur 1 beschrieben, laufen über die einlaufseitig angeordnete Scheibenwelle 5 eine Anzahl von Transportriemen 6, die in engem Abstand benachbart zueinander angeordnet sind. Der Abstand der einzelnen Transportriemen 6 voneinander hängt von der Art des zu drehenden Stückgutes ab. Sollen beispielsweise Käsescheiben mit Kantenlängen von 10 x 10 cm gedreht werden, dann wählt man bevorzugt eine Anzahl von 10 - 15 Transportriemen, die in einem gegenseitigen Abstand von 5 mm angeordnet sind.

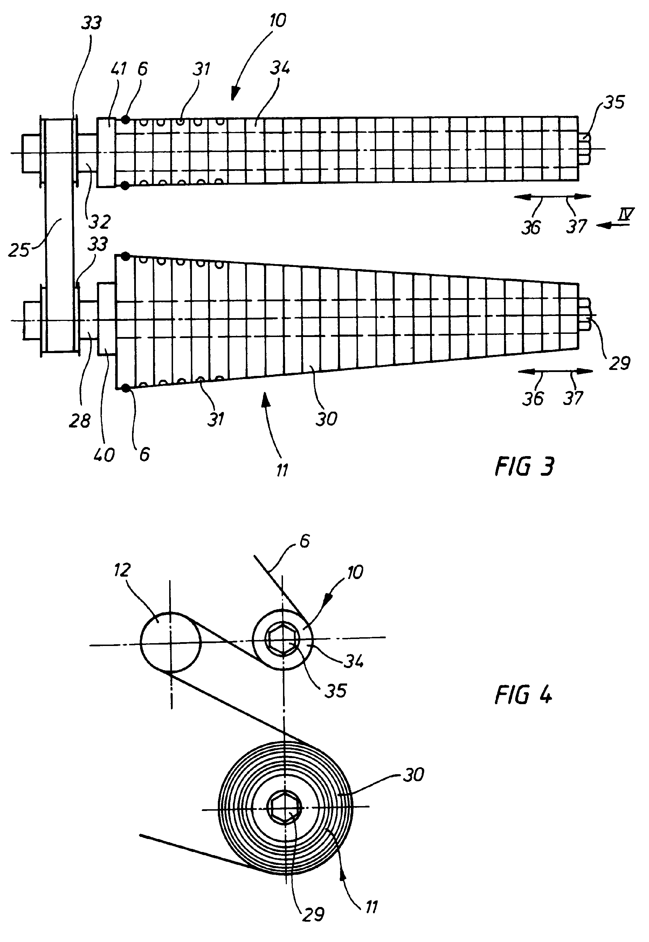

Jeder Transportriemen 6 läuft von der Scheibenwelle 5 ausgehend mit seinem Obertrum 14 über eine an der Auslaufseite angeordnete zylindrische Scheibenwelle 7. Von dort läuft jeder Transportriemen 6 über eine weitere Scheibenwelle 9, die als Umlenkwelle dient, über eine zylindrische Antriebswelle 10, die in Verbindung mit der Figur 3 später noch beschrieben wird. Von der Antriebswelle 10 ausgehend wird eine weitere Scheibenwelle 12 umschlungen, von der aus jeder Transportriemen über eine Konuswelle 11 läuft.

Die zwischen der zylindrischen Antriebswelle 10 und der Konuswelle 11 angeordnete zylindrische Scheibenwelle 12 dient nur dazu, um einen genügenden Umschlingungswinkel sowohl auf der Antriebswelle 10 als auch auf der Konuswelle 11 für jeden Transportriemen 6 zu erreichen. Wichtig hierbei ist, daß entweder nur die Riemenscheiben 34 der zylindrischen Antriebswelle 10 oder alternativ nur die Riemenscheiben 30 der Konuswelle 11 angetrieben sind; daß aber niemals beide Riemenscheiben 30,34 zusammen angetrieben werden.

Nach der Umschlingung der Konuswelle 11 läuft der Transportriemen 6 mit seinem Untertrum 13 wieder zur einlaufseitig angeordneten Scheibenwelle 5 zurück.

Das Ausgleichsband 16, welches an die Auslaufseite des Förderbandes 4 anschließt, besteht im wesentlichen ebenfalls aus einer Anzahl von parallel nebeneinander angeordneten, synchron angetriebenen Transportriemen 18, wobei jeder Transportriemen über eine zylindrische Umlenkrolle 17 an der Einlaufseite geführt ist und an der Auslaufseite über eine ebenfalls zylindrische Umlenkrolle 22 geführt ist. Das Untertrum 19 wird dann über eine kleinere Umlenkrolle 23 einer Antriebswelle 24 zugeführt und gelangt von der Antriebswelle 24 über eine Umlenkrolle 27 wieder zur einlaufseitig angeordneten Umlenkrolle 17 zurück.

Zur Veränderung der Förderlänge des Förderbandes 4 in den Pfeilrichtungen 8,8' ist nun vorgesehen, daß auch gleichzeitig die Förderlänge des Ausgleichsbandes entsprechend nachgestellt wird. Zu diesem Zweck sind die Wellen 7,9,17,27 auf einer gemeinsamen Verstellplatte 20 angeordnet, welche in Verstellführungen 15,21 verschiebbar im Maschinengestell 1 in den Pfeilrichtungen 8,8' geführt ist, so daß mit der Verstellung der Verstellplatte 20 die vorher erwähnten Wellen zusammen und synchron verstellt werden, und zwar in ihren gestrichelten Positionen, wie in Figur 2 eingezeichnet. Auf diese Weise wird beispielsweise bei einer Verschiebung in Pfeilrichtung 8 die Förderlänge des Förderbandes 4 verkürzt und gleichzeitig die Förderlänge des Ausgleichsbandes 16 verlängert.

Wichtig hierbei ist, daß der gesamte Antrieb des Förderbandes 4 und des Ausgleichsbandes 16 über einen einzigen Motor 26 erfolgt, der einen Zahnriemen 25 antreibt, welcher Zahnriemen über die Konuswelle 11, die Antriebswelle 10, die Antriebswelle 24 und die Antriebswelle des Motors selbst geführt ist.

Die weiteren Einzelheiten dieses Antriebs ergeben sich aus den Figuren 3 und 4.

Der Zahnriemen 25 treibt hierbei über zugeordnete Antriebsräder 33 immer synchron die Wellen 28, 32 an.

Auf der oberen Antriebswelle 10 sind hierbei Riemenscheiben 34 mit gleichem Durchmesser angeordnet, wobei jede Riemenscheibe 34 eine Ringnut 31 zur Aufnahme des rundprofilierten Transportriemens 6 aufweist.

Im gekuppelten Zustand werden die Riemenscheiben 34 von einer stirnseitig angebrachten Spannschraube 35 gegen einen drehfest mit der Welle 32 verbundenen Flansch 41 gepresst, so daß die Riemenscheiben 34 synchron und drehfest mit der Welle 32 gekuppelt sind.

Eine gleiche Kupplungsanordnung ist bei der unteren Konuswelle 11 gegeben. Dort weisen die Riemenscheiben 30 einen über die axiale Länge der Konuswelle 11 abgestuften unterschiedlichen Durchmesser auf, wobei ebenfalls mit der Spannschraube 29 alle Riemenscheiben 30 gegen einen mit der Welle drehfest verbundenen Flansch 40 gepresst werden können und hierdurch ebenfalls drehfest mit der Welle 28 gekuppelt werden können.

Es sind entweder immer nur die Riemenscheiben 34 mit der Welle 32 gekuppelt oder die Riemenscheiben 30 mit der Welle 28. Wenn die Spannschraube 35 in Pfeilrichtung 36 vorgespannt ist, ist die Spannschraube 29 in Pfeilrichtung 37 entspannt. Umgekehrt gilt, daß wenn die Spannschraube 29 in Pfeilrichtung 36 gespannt ist, dann die Spannschraube 35 in Pfeilrichtung 37 entspannt ist.

Statt der hier gezeigten Spannschrauben kann selbstverständlich eine elektromagnetische, eine hydraulische oder eine pneumatische Kupplung verwendet werden.

Ebenso sind alle Kupplungsmechanismen möglich, die zum Stand der Technik gehören und die es vermögen, eine Anzahl von Riemenscheiben drehfest mit einer drehenden Welle zu kuppeln oder zu entkuppeln.

In Figur 4 sind noch die abgestuften Durchmesser der einzelnen Riemenscheiben 30 in der Stirnansicht der Konuswelle 11 erkennbar.

## Patentansprüche

1. Drehvorrichtung für auf einem Transportband gefördertes Stückgut mit mehreren, zueinander parallel verlaufenden Teil-Transportbändern (6), die mit unterschiedlichen Geschwindigkeiten antreibbar sind, wobei die Teil-Transportbänder (6) über eine auf Drehung angetriebene Konuswelle (11) geführt sind, die aus nebeneinander angeordneten, drehfest gekoppelten Riemenscheiben (34) besteht, deren Durchmesser sich über die Länge der Konuswelle (11) linear ändern, **dadurch** **gekennzeichnet**, daß eine am Ende des Transportbandes (4) vorgesehene Scheibenwelle (7), über die die Teil-Transportbänder (6) geführt sind, in Transportrichtung verstellbar ist.

2. Drehvorrichtung nach Anspruch 1, **dadurch** **gekennzeichnet**, daß ein sich an das Transportband (4) anschließendes Ausgleichsband (16) zusammen mit der Scheibenwelle (7) verstellbar ist.

3. Drehvorrichtung nach Anspruch 2, **dadurch gekennzeichnet**, daß eine in Förderrichtung vorne liegende Umlenkrolle (17) des Ausgleichsbandes (16) zusammen mit der in Förderrichtung hinten liegenden Scheibenwelle (7) des Transportbandes (4) auf einer gemeinsamen Verstellplatte (20) drehbar angeordnet sind, die in Verstellführungen in einem Maschinengestell in Förderrichtung und in Gegenrichtung hierzu verschiebbar angeordnet ist.

4. Drehvorrichtung nach einem der Ansprüche 1 - 3, **dadurch gekennzeichnet**, daß eine zusätzliche Einstellvorrichtung zur Einstellung der Drehung vorgesehen ist.

5. Drehvorrichtung nach Anspruch 4, **dadurch gekennzeichnet**, daß eine Umlenkeinrichtung mit einer Kupplungseinrichtung vorgesehen ist, derart, daß mit Hilfe der Umlenkeinrichtung die unterschiedlichen Geschwindigkeiten der Teil-Transportbänder (6) ausschaltbar sind bzw. alle Teil-Transportbänder (6) synchron auf Drehung angetrieben werden können.

6. Drehvorrichtung nach einem der Ansprüche 4 oder 5, **dadurch gekennzeichnet**, daß die Riemenscheiben (34) auf einer Welle (28) drehfest kuppelbar angeordnet sind.

7. Drehvorrichtung nach Anspruch 6, **dadurch** **gekennzeichnet**, daß an einer Stirnseite der Konuswelle (11) eine Spannschraube (29) vorgesehen ist.

8. Drehvorrichtung nach einem der Ansprüche 4 - 7, **dadurch gekennzeichnet**, daß die Teil-Transportbänder (6) über einen Umschlingungswinkel über eine zusätzliche Antriebswelle (24) geführt sind.

9. Drehvorrichtung nach Anspruch 8, **dadurch gekennzeichnet**, daß die zusätzliche Antriebswelle aus Riemenscheiben besteht, die gleiche Durchmesser haben.

10. Drehvorrichtung nach Anspruch 9, **dadurch gekennzeichnet**, daß eine Kupplungseinrichtung mit einer Spannschraube vorgesehen ist, so daß die Riemenscheiben wahlweise miteinander gekuppelt oder freilaufend sind.

## Claims

1. Turning device for piece goods conveyed on a conveyor belt with several part conveyor belts extending parallel with one another and capable of being driven at different speeds, wherein the part conveyor belts (6) are guided via a taper shaft (11), driven in rotation, which consists of belt pulleys (34) arranged alongside one another and coupled so as to rotate together, the diameters of which vary linearly over the length of the taper shaft (11), characterised in that a pulley shaft (7) provided at the end of the conveyor belt (4), over which the part conveyor belts (6) are guided, is capable of being adjusted in the conveying direction.

2. Turning device according to claim 1, characterised in that a levelling belt (16) immediately following the conveyor belt (4) is capable of being adjusted together with the pulley shaft (7).

3. Turning device according to claim 2, characterised in that a return roller (17) of the levelling belt (16), lying in front in the conveying direction, together with the pulley shaft (7) of the conveyor belt (4) lying behind in the conveying direction, are rotatably mounted on a common setting plate (20) which is mounted in setting guides in a machine frame so as to be capable of shifting in the conveying direction, and in the opposite direction.

4. Turning device according to one of claims 1 to 3, characterised in that an additional adjusting device is provided for adjusting the turn.

5. Turning device according to claim 4, characterised in that a return device with a coupling device is provided, so that by means of the return device the differing speeds of the part conveyor belts (6) are capable of being switched off and all the part conveyor belts (6) can be synchronously driven in rotation.

6. Turning device according to one of claims 4 or 5, characterised in that the belt pulleys (34) are arranged on a shaft (28) so as to be capable of being coupled to the shaft so as to rotate with it.

7. Turning device according to claim 6, characterised in that a clamping screw (29) is provided at one end face of the taper shaft (11).

8. Turning device according to one of claims 4 to 7, characterised in that the part conveyor belts (6) are guided over an angle of wrap via an additional drive shaft (24).

9. Turning device according to claim 8, characterised in that the additional drive shaft consists of belt pulleys which have the same diameter.

10. Turning device according to claim 9, characterised in that a coupling device with a clamping screw is provided, so that the belt pulleys are optionally coupled together or allowed to run freely.

## Revendications

1. Dispositif de rotation pour des produits individuels transportés sur une bande transporteuse comportant plusieurs bandes transporteuses partielles (6) parallèles qui sont aptes à être entraînées à des vitesses différentes, les bandes transporteuses partielles (6) étant guidées par l'intermédiaire d'un arbre conique (11) entraîné en rotation qui se compose de poulies (34) juxtaposées et accouplées solidaires en rotation dont les diamètres varient linéairement sur la longueur de l'arbre conique (11), caractérisé en ce qu'un arbre de poulies (7) qui est prévu à la fin de la bande transporteuse (4) et par l'intermédiaire duquel sont guidées les bandes transporteuses partielles (6) est réglable dans le sens du transport.

2. Dispositif de rotation selon la revendication 1, caractérisé en ce qu'une bande d'équilibrage (16) faisant suite à la bande transporteuse (4) est réglable avec l'arbre de poulies (7).

3. Dispositif de rotation selon la revendication 2, caractérisé en ce qu'une poulie de renvoi (17) de la bande d'équilibrage (16), placée à l'avant, dans le sens de transport, est disposée pour pouvoir tourner avec l'arbre de poulies (7) de la bande de transport (4) placé à l'arrière, dans le sens de transport, sur une plaque de réglage commune (20) qui est disposée dans des guidages de réglage, dans un bâti de machine, pour pouvoir coulisser dans le sens de transport et dans le sens opposé à celui-ci.

4. Dispositif de rotation selon l'une des revendications 1 à 3, caractérisé en ce qu'il est prévu un dispositif de réglage supplémentaire pour le réglage de la rotation.

5. Dispositif de rotation selon la revendication 4, caractérisé en ce qu'il est prévu un dispositif de déviation comportant un dispositif d'accouplement, de telle sorte que les vitesses différentes des bandes transporteuses partielles (6) peuvent être supprimées à l'aide du dispositif de déviation et que toutes les bandes transporteuses partielles (6) puissent être entraînées en rotation de façon synchrone.

6. Dispositif de rotation selon l'une des revendications 4 ou 5, caractérisé en ce que les poulies (34) sont disposées pour pouvoir être accouplées, solidaires en rotation, sur un arbre (28).

7. Dispositif de rotation selon la revendication 6, caractérisé en ce qu'il est prévu une vis de serrage (29) sur un côté frontal de l'arbre conique (11).

8. Dispositif de rotation selon l'une des revendications 4 à 7, caractérisé en ce que les bandes transporteuses partielles (6) sont guidées par l'intermédiaire d'un arbre d'entraînement supplémentaire (24) suivant un angle d'enroulement.

9. Dispositif de rotation selon la revendication 8, caractérisé en ce que l'arbre d'entraînement supplémentaire se compose de poulies qui ont le même diamètre.

10. Dispositif de rotation selon la revendication 9, caractérisé en ce qu'il est prévu un dispositif d'accouplement pourvu d'une vis de serrage, de sorte que les poulies sont accouplées entre elles ou libres, au choix.
